# EUROPÄISCHE PATENTSCHRIFT

(11) **EP 0 808 261 B1**
(45) Veröffentlichungstag und Bekanntmachung des Hinweises auf die Patenterteilung: **12.01.2000**
(21) Anmeldenummer: 96933421.8
(22) Anmeldetag: 30.09.1996
(51) Int. Cl.: B60T 8/42, B60T 8/26

(54) **HYDRAULISCHE KRAFTFAHRZEUGBREMSANLAGE MIT RADSCHLUPFREGELUNG**
HYDRAULIC MOTOR VEHICLE BRAKING SYSTEM WITH WHEEL SLIP CONTROL
SYSTEME DE FREINAGE HYDRAULIQUE AVEC DISPOSITIF ANTIPATINAGE POUR VEHICULES A MOTEUR

(30) Priorität: 07.10.1995 DE 19537460
(43) Veröffentlichungstag der Anmeldung: 26.11.1997
(73) Patentinhaber: Continental Teves AG & Co. oHG, 60488 Frankfurt (DE)
(72) Erfinder: SPÄTH, Rolf, D-35792 Löhnberg (DE)
(86) Internationale Anmeldenummer: EP9604248
(87) Internationale Veröffentlichungsnummer: WO9713668

(56) Entgegenhaltungen:
- WO-A-92/18363
- DE-A- 3 403 236
- DE-A- 3 613 470
- DE-A- 4 326 040

## Beschreibung

Die Erfindung betrifft eine hydraulische Kraftfahrzeugbremsanlage mit Radschlupfregelung nach dem Oberbegriff des Patentanspruchs 1.

Aus der DE 4326040A1 geht bereits eine hydraulische Kraftfahrzeugbremsanlage mit Radschlupfregelung hervor, die an den in Diagonalbremskreisaufteilung angeordneten Hinterrädern sowohl als Druckmodulationsventile wirksame Einlaß- und Auslaßventile aufweist als auch zur Volumenaufnahme während einer Antiblockierregelung stromabwärts zu den Auslaßventilen mit Druckmittelspeichern versehen ist. Den Vorderrädern sind ausschließlich als Druckmodulationsventile wirksame Einlaßventile zugeordnet, da der Druckabbau in den Vorderradbremsen über die den Hinterradbremsen zugeordneten Einlaß- und Auslaßventilen erfolgt.

Diese Schaltungsanordnung beeinträchtigt jedoch die Güte der Bremsdruckregelung, da durch die Hintereinanderschaltung der Druckmodulationsventile für die Radbremsen eines Diagonalbremskreises zwangsläufig eine Druckabsenkung in der Vorderradbremse auch zu einer Druckabsenkung an der Hinterradbremse führt.

Befindet sich die Vorderradbremse in der Druckhaltephase, so ist auch keine Druckerhöhung in der Hinterradbremse möglich. Durch die geschilderte Hydraulikschaltung eignet sich diese Bremsanlage überdies nicht für eine elektronisch beeinflußbare Bremskraftverteilung, so daß die gewünschte maximale Bremskraftausnutzung nicht zustandekommt.

Daher ist es die Aufgabe der Erfindung, eine hydraulische Kraftfahrzeugbremsanlage mit Radschlupfregelung gemäß der eingangs genannten Art derart auszubilden, daß mit relativ geringem schaltungstechnischen und konstruktiven Aufwand eine verbesserte Betriebsweise sowohl auf Fahrbahnen mit Niedrigreibwert als auch Fahrbahnen mit Hochreibwert zustandekommt, wobei auch eine elektronisch beeinflußbare Bremskraftverteilung zum Zwecke einer maximalen Hinterachsbremskraftausnutzung möglich sein soll.

Diese Aufgabe wird erfindungsgemäß für eine Kraftfahrzeugbremsanlage der angegebenen Art mit den kennzeichnenden Merkmalen des Patentanspruchs 1 gelöst.

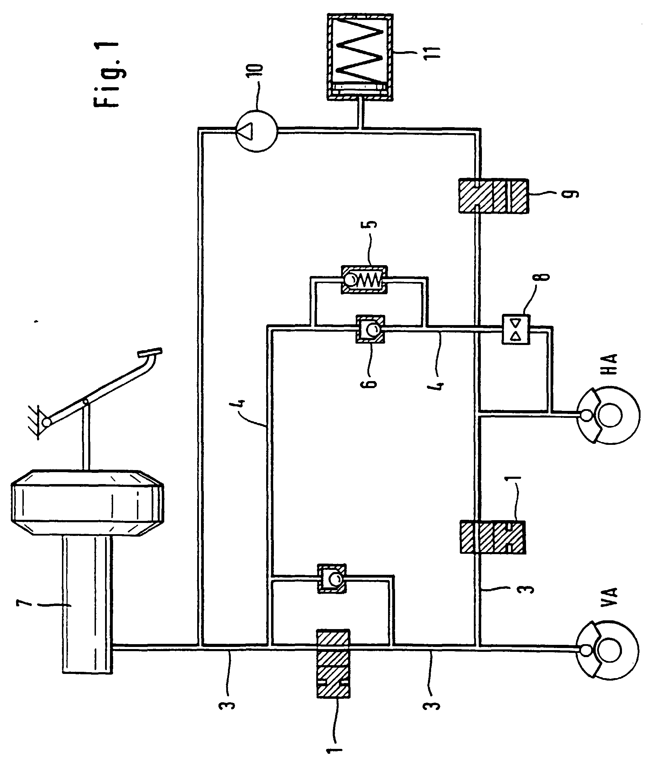

Weitere Merkmale und zweckmäßige Ausgestaltungsvarianten der Erfindung gehen aus den Unteransprüchen hervor, wobei die Erfindung nachfolgend anhand einer Zeichnung erläutert wird. Beispielhaft dargestellt ist in Fig. 1 ausschließlich ein Bremskreis für eine Hinterradbremse HA und eine Vorderradbremse VA. Die Vorderradbremse VA ist über ein in die Bremsdruckleitung 3 eingesetztes Einlaßventil 1 mit dem Bremsdruckgeber 7 verbunden. Zwischen dem Einlaßventil 1 und der Vorderradbremse VA zweigt die Bremsdruckleitung 3 in Richtung der Hinterradbremse HA ab und nimmt in ihrem Druckmittelpfad gleichfalls ein Einlaßventil 1 auf. Stromabwärts zum Einlaßventil 1 schließt sich der Bremsdruckleitung 3 ein Auslaßventil 9 an, das in seiner elektromagnetisch nicht erregten Grundstellung den Druckmittelrücklauf von der Vorderradbremse VA und der Hinterradbremse HA zu einer Pumpe 10 sperrt. Zwischen der Pumpe 10 und dem Auslaßventil 9 befindet sich in einem Abzweig ein Druckmittelspeicher 11. Die Druckseite der Pumpe 10 ist stromaufwärts zum Einlaßventil 1 an der Vorderradbremse VA mit dem Bremsdruckgeber 7 verbunden. Zwischen dem Anschluß der Druckseite der Pumpe 10 an die Bremsdruckleitung 3 und dem Einlaßventil 1 für die Vorderradbremse VA schließt sich an die Bremsdruckleitung 3 eine Bypass-Leitung 4 an, die zur Hinterradbremse HA führt. In die Bypass-Leitung 4 sind hydraulisch betätigbare Ventile 5,6 eingesetzt, die sowohl einen Bremsdruckaufbau als auch einen Bremsdruckabbau in der Hinterradbremse HA steuern. Zum Bremsdruckaufbau in der Hinterradbremse HA ist ein als hydraulisch betätigbares Ventil in Richtung der Hinterradbremse HA öffnendes Druckdifferenzventil 5 in die Bypass-Leitung 4 eingesetzt. Ein weiteres als Rückschlagventil 6 in Richtung des Bremsdruckgebers 7 öffnendes Ventil ermöglicht einen Bremsdruckabbau in der Hinterradbremse HA, wobei das Rückschlagventil 6 parallel zum Druckdifferenzventil 5 in der Bypass-Leitung 4 angeordnet ist. Ferner befindet sich in der Bypass-Leitung 4 eine Blende 8, die den Druckaufbaugradienten an der Hinterradbremse HA bestimmt. Die Blende 8 befindet sich stromabwärts zum Druckdifferenzventil 5 und dem Rückschlagventil 6.

Nachfolgend wird die Funktionsweise der erfindungsgemäßen Bremsanlage erläutert.

Die Fig. 1 zeigt die elektromagnetisch betätigbaren Einlaßventile 1 in ihrer nicht erregten offenen Grundstellung, während das seriell den Einlaßventilen 1 nachgeordnete Auslaßventil 9 in seiner elektromagnetisch stromlos geschlossenen Position verharrt. Gleichfalls sind die Ventile 5,6 in ihrer Grundstellung abgebildet, in der das Druckdifferenzventil 5 unter Wirkung einer definierten Federvorspannkraft die Druckmittelverbindung des Hauptzylinders 7 mit der Hinterradbremse HA über die Bypass-Lüftung 4 sperrt. Das Rückschlagventil 6 liegt gleichfalls im Sinne einer Sperrwirkung an seinem Ventilsitz an, so daß sowohl in der Bremslöse- als auch schlupffreien Normalbremsstellung die Bypass-Leitung 4 keine Verbindung zur Hinterradbremse HA aufweist.

Zum Zwecke einer elektronisch beeinflußbaren Bremskraftverteilung während des Normalbremsbetriebes, ist der Bremsdruck in der Hinterradbremse HA in Abhängigkeit von den Schaltstellungen des der Hinterradbremse HA zugeordneten Einlaßventils 1 und Auslaßventils 9 steuerbar. Damit ein Einströmen von Druckmittel zur Hinterradbremse HA unter Umgehung der Einlaßventile 1 während einer elektronischen Bremskraftverteilung unterbleibt, ist der Differenzdruck am Differenzdruckventil 5 derart zu wählen, daß während der elektronischen Bremskraftverteilung das Druckdifferenzventil 5 geschlossen verharrt. Die für diese Maßnahme erforderliche Sperrwirkung des Druckdifferenzventils 5 ist in der Abbildung symbolisch durch eine entsprechend große Vorspannkraft einer Druckfeder dargestellt.

Zum Zwecke einer Radschlupfregelung auf Hochreibwerte zwischen Fahrbahn und Fahrzeugrad sind die Einlaßventile 1 und das Auslaßventil 9 elektromagnetisch aktiviert. Gleichfalls wird die Pumpe 10 in Betrieb gesetzt, um das von den Radbremsen VA, HA abgelassene Druckmittel in Richtung der Bremsdruckleitung 3 zu fördern. Überschüssiges Druckmittel des Bremskreises kann ggf. im Speicher 11 verharren. Im einzelnen erfolgt der Druckabbau in der Vorderradbremse VA zunächst mit dem elektromagnetischen Schließen des Einlaßventils 1 und elektromagnetisch betätigten Öffnen des Auslaßventils 9, während das stromaufwärts zur Hinterradbremse HA angeordnete Einlaßventil 1 in seiner elektromagnetisch nicht erregten offenen Grundstellung verharrt. Zwecks Einstellung eines Haltedruckniveaus an der Vorderradbremse VA schließt sodann elektromagnetisch erregt das stromabwärts zur Vorderradbremse VA angeordnete Einlaßventil 1.
Beim Überschreiten des Öffnungsdrucks am Differenzdruckventil 5 gelangt von der Pumpe 10 in die Bypass-Leitung 4 eingespeistes Druckmittel zur Hinterradbremse HA. Somit ist die Hinterradbremse HA trotz den gesperrten Einlaßventilen 1 vermindert um den Ansprechdruck des Differenzdruckventils 5 mit der Bremsdruckleitung 3 verbunden, so daß in Abhängigkeit von der Kalibrierung der Blende 8 in der Bypass-Leitung 4 ein fahrzeugspezifischer Druckaufbaugradient an der Hinterradbremse HA eingestellt werden kann. Die Regelung des Bremsdrucks in der Hinterradbremse HA zum Zwecke des Druckaufbaus und Druckabbaus geschieht sodann durch den taktweisen Betrieb des Auslaßventils 9, beispielsweise durch Pulsweiten-Modulation. Sobald das Lösen des Bremspedals die Beendigung des Bremsbetriebs signalisiert, erfolgt ein rascher Druckabbau in der Hinterradbremse HA über das in Richtung des Bremsdruckgebers 7 öffnende Rückschlagventil 6. Damit unterscheidet sich die Bremsdruckregelung in der Vorderradbremse VA von der Hinterradbremse HA im wesentlichen nur durch die Möglichkeit, einen erneuten Vorderachs-Druckaufbau in Druckstufen mit Druckhaltephasen auszubilden, während die Bremsdruckregelung an der Hinterachse HA infolge des Taktbetriebs des Auslaßventils 9 im wesentlichen durch einen Druckaufbau- und Druckabbau-Zyklus mit sägezahnformigen Kennlinienverlauf gekennzeichnet ist.

Vorbeschriebene Hydraulikschaltung eignet sich überdies uneingeschränkt für den Radschlupfregelbetrieb auf Niedrigreibwerte der Fahrbahn, wobei im Vergleich zu dem relativ niedrigen Bremsdruckniveau in der Vorderradbremse VA ein hierzu relativ hohes Druckniveau über die Bypass-Leitung 4 der Hinterradbremse HA zugeleitet werden kann, das im Zusammenwirken mit einer entsprechenden Schaltfrequenz des Auslaßventils 9 bis zum Blockierdruckniveau an der Hinterradbremse HA gesteigert werden kann. Die voran zum Betrieb der Bremsanlage auf Hochreibwerte beschriebene Druckregelcharakteristik unterscheidet sich nicht wesentlich von dem Bremsdruckregelverlauf bei Niedrigreibwert der Fahrbahn, so daß hinsichtlich den einzelnen Bremsdruckregelphasen auf Niedrigreibwert auf die voran beschriebene Bremsdruckregelung bei Hochreibwert verwiesen wird.

Die hiermit vorgestellte Erfindung ermöglicht somit gegenüber dem Stand der Technik eine Bremsdruckregelung an der Hinterradbremse HA, die weitgehend vom Bremsdruckregelverlauf an der Vorderradbremse VA unabhängig ist, so daß bei Bedarf auch ein höheres Druckniveau an der Hinterradbremse HA als an der Vorderradbremse VA erreicht werden kann, womit im besonderen bei einer Bremsdruckregelung auf Niedrigreibwerte die Bremsleistung an der Hinterradbremse HA verbessert ist. Überdies eignet sich der Erfindungsgegenstand für den Betrieb mit elektronischer Bremskraftverteilung zwischen Vorderradbremse und Hinterradbremse, so daß auf die bisher verwendeten mechanischen Bremskraftregler an den Hinterachsbremsen verzichtet werden kann. Die vorgeschlagenen Bremsanlage zeichnet sich durch einen relativ geringen schaltungstechnischen und konstruktiven Aufwand bei verbesserter Betriebsweise aus.

### Bezugszeichenliste

- 1: Einlaßventil
- 3: Bremsdruckleitung
- 4: Bypass-Leitung
- 5: Differenzdruckventil
- 6: Rückschlagventil
- 7: Bremsdruckgeber
- 8: Blende
- 9: Auslaßventil
- 10: Pumpe
- 11: Speicher

## Patentansprüche

1. Hydraulische Kraftfahrzeugbremsanlage mit Radschlupfregelung, mit einem Bremsdruckgeber (7), der mit wenigstens einem Paar Radbremsen hydraulisch in Verbindung steht, mit einem in einer Bremsdruckleitung (3) stromaufwärts und stromabwärts zu einer Vorderradbremse angeordneten Druckmodulationsventil (1), wobei das stromabwärts zur Vorderradbremse angeordnete Druckmodulationsventil (1) als Einlaßventil einer Hinterradbremse vorgeordnet ist, sowie mit einem stromabwärts zur Hinterradbremse angeordneten Druckmodulationsventil, das als Auslaßventil (9) in seiner Grundstellung die Radbremsen von einer Druckmittelverbindung trennt, die zu einer Pumpe (10) führt, die mit ihrer Saugseite an den Radbremsen, mit ihrer Druckseite am Bremsdruckgeber (7) angeschlossen ist, dadurch **gekennzeichnet**, daß stromaufwärts zu einem Einlaßventil (1) der Vorderradbremse (VA) an der Bremsdruckleitung (3) eine Bypass-Leitung (4) angeschlossen ist, die zur Hinterradbremse (HA) führt und daß in der Bypass-Leitung (4) hydraulisch betätigbare Ventile (5,6) vorgesehen sind, die sowohl einen Bremsdruckaufbau als auch einen Bremsdruckabbau in der Hinterradbremse (HA) unabhängig von der Stellung der für die vorderradbremse (VA) vorgesehenen Druckmodulationsventile (1) steuern.

2. Hydraulische Kraftfahrzeugbremsanlage nach Anspruch 1, dadurch **gekennzeichnet**, daß zum Bremsdruckaufbau in der Hinterradbremse (HA) als Ventil ein in Richtung der Hinterradbremse (HA) öffnendes Druckdifferenzventil (5) in der Bypass-Leitung (4) angeordnet ist.

3. Hydraulische Kraftfahrzeugbremsanlage nach Anspruch 1 oder 2, dadurch **gekennzeichnet**, daß die Bypass-Leitung (4) zum Bremsdruckabbau in der Hinterradbremse (HA) als hydraulisch betätigbares Ventil ein in Richtung des Bremsdruckgebers (7) öffnendes Rückschlagventil (6) aufweist.

4. Hydraulische Kraftfahrzeugbremsanlage nach Anspruch 3, dadurch **gekennzeichnet**, daß das Rückschlagventil (6) parallel zum Druckdifferenzventil (5) geschaltet ist.

5. Hydraulische Kraftfahrzeugbremsanlage nach Anspruch 1, dadurch **gekennzeichnet**, daß in der Bypass-Leitung (4) eine Blende (8) angeordnet ist, die den Druckaufbaugradienten an der Hinterradbremse (HA) einstellt.

6. Hydraulische Kraftfahrzeugbremsanlage nach Anspruch 5, dadurch **gekennzeichnet**, daß die Blende (8) stromabwärts zu den Ventilen (5,6) angeordnet ist.

## Claims

1. Hydraulic automotive vehicle brake system with wheel slip control, which includes a braking pressure generator (7) that is in a hydraulic communication with at least one pair of wheel brakes, a pressure modulation valve (1) that is arranged in a braking pressure line (3) upstream and downstream of a front-wheel brake, and the pressure modulation valve (1) which is arranged downstream of the front-wheel brake, in the capacity of an inlet valve, is arranged upstream of a rear-wheel brake, and a pressure modulation valve arranged downstream of the rear-wheel brake which, in the capacity of an outlet valve (9), in its initial position separates the wheel brakes from a pressure fluid connection which leads to a pump (10) that is connected, with its suction side, to the wheel brakes and, with its pressure side, to the braking pressure generator (7),
**characterized** in that upstream of an inlet valve (1) of the front-wheel brake (VA), a bypass line (4) that leads to the rear-wheel brake (HA) is connected to the braking pressure line (3), and in that hydraulically operable valves (5, 6) are provided in the bypass line (4) which control both braking pressure increase and braking pressure decrease in the rear-wheel brake (HA) irrespective of the position of the pressure modulation valves (1) allocated to the front-wheel brake (VA).

2. Hydraulic automotive vehicle brake system as claimed in claim 1,
**characterized** in that a pressure differential valve (5) which opens in the direction of the rear-wheel brake (HA) is arranged in the bypass line (4) as a valve for the braking pressure increase in the rear-wheel brake (HA).

3. Hydraulic automotive vehicle brake system as claimed in claim 1 or claim 2,
**characterized** in that the bypass line (4) includes a non-return valve (6) which opens in the direction of the braking pressure generator (7) as a hydraulically operable valve for the braking pressure decrease in the rear-wheel brake (HA).

4. Hydraulic automotive vehicle brake system as claimed in claim 3,
**characterized** in that the non-return valve (6) is connected in parallel to the pressure differential valve (5).

5. Hydraulic automotive vehicle brake system as claimed in claim 1,
**characterized** in that an orifice (8) is arranged in the bypass line (4) to adjust the pressure increase gradient on the rear-wheel brake (HA).

6. Hydraulic automotive vehicle brake system as claimed in claim 5,
**characterized** in that the orifice (8) is arranged downstream of the valves (5, 6).

## Revendications

1. Système de freinage hydraulique pour véhicule automobile à régulation antipatinage des roues, comprenant un générateur de pression de freinage (7) qui est en communication hydraulique avec au moins une paire de freins de roues, comportant une soupape (1) de modulation de pression, disposée dans une conduite de frein (3) en amont et en aval d'un frein de roue avant, la soupape (1) de modulation de pression disposée en aval du frein de roue avant étant agencée en tant que soupape d'admission en amont d'un frein de roue arrière, ainsi qu'une soupape de modulation de pression qui est disposée en aval du frein de roue arrière et qui, servant de soupape d'échappement (9), sépare, dans sa position de repos, les freins de roues d'une liasion de fluide de pression qui mène â une pompe (10) dont le côté aspiration est raccordé aux freins de roues et dont le côté refoulement est raccordé au générateur (7) de pression de freinage,
caractérisé en ce qu'une conduite de dérivation (4) est branchée sur la conduite de frein (3) en amont d'une soupape d'admission (1) du frein de roue avant (VA), cette conduite conduisant au frein de roue arrière (HA), et en ce que des soupapes (5, 6) à commande hydraulique sont prévues dans la conduite de dérivation (4), qui commandent non seulement une augmentation de la pression de freinage, mais encore une diminution de la pression de freinage dans le frein de roue arrière (HA) de façon indépendante de la position des soupapes (1) de modulation de pression prévues pour le frein de roue avant (VA).

2. Système de freinage hydraulique pour véhicule automobile selon la revendication 1, caractérisé en ce qu'une soupape de pression différentielle (5) ouvrant en direction du frein de roue arrière (HA) est disposée dans la conduite de dérivation (4) en tant que soupape permettant l'augmentation de la pression de freinage dans le frein de roue arrière (HA).

3. Système de freinage hydraulique pour véhicule automobile selon la revendication 1 ou 2, caractérisé en ce que, pour assurer la diminution de la pression de freinage régnant dans le frein de roue arrière (HA), la conduite de dérivation (4) comporte, en tant que soupape à commande hydraulique, un clapet de non-retour (6) ouvrant en direction du générateur de pression de freinage (7).

4. Système de freinage hydraulique pour véhicule automobile selon la revendication 3, caractérisé en ce que le clapet de non-retour (6) est branché en parallèle avec la soupape de pression différentielle (5).

5. Système de freinage hydraulique pour véhicule automobile selon la revendication 1, caractérisé en ce qu'un diaphragme (8) est prévu dans la conduite de dérivation (4), qui règle le gradient d'augmentation de la pression du frein de roue arrière (HA).

6. Système de freinage hydraulique pour véhicule automobile selon la revendication 5, caractérisé en ce que le diaphragme (8) est agencé en aval des soupapes (5, 6).
